# EUROPEAN PATENT APPLICATION

(11) **EP 4 509 539 A1**
(43) Date of publication of application: **19.02.2025**
(21) Application number: 23788547.0
(22) Date of filing: 10.04.2023
(51) Int. Cl.: C08F 265/06, C08F 220/06, C08F 216/14, C08F 218/08, C08F 220/14, H01M 4/62, H01M 10/052, H01M 4/02

(54) **BINDER COMPRISING COPOLYMER, ANODE FOR SECONDARY BATTERY COMPRISING SAME BINDER, SECONDARY BATTERY COMPRISING SAME ANODE, AND METHOD FOR POLYMERIZING SAME COPOLYMER**

(30) Priority: 11.04.2022 KR 20220044461
(71) Applicant: Hansol Chemical Co., Ltd, Seoul 06169 (KR)
(72) Inventor: PARK, Ji-Hye, Wanju-gun, Jeollabuk-do 55321 (KR); KIM, Chang-Beom, Wanju-gun, Jeollabuk-do 55321 (KR); PARK, So-Hyun, Wanju-gun, Jeollabuk-do 55321 (KR); PARK, Chan-Su, Wanju-gun, Jeollabuk-do 55321 (KR); GWON, Hyeon-Ji, Wanju-gun, Jeollabuk-do 55321 (KR); KIM, Gyun-Tae, Wanju-gun, Jeollabuk-do 55321 (KR); KWON, Se-Man, Wanju-gun, Jeollabuk-do 55321 (KR)
(74) Representative: Cabinet Laurent & Charras
(86) International application number: PCT/KR2023/004793
(87) International publication number: WO 2023/200197

(57) **Abstract**

The present invention relates to a poly(vinyl alcohol-co-acrylic acid-co-cyanoethylated vinyl alcohol) (PVA-PAA-CEPVA) copolymer and a method for preparing same, and an anode slurry, an anode, and a secondary battery comprising the copolymer.

## Description

### Technical Field

The present disclosure relates to a copolymer capable of being used as a binder, to a method of preparing the same copolymer, and to a slurry, electrode, and secondary battery containing the same copolymer.

### Background Art

Lithium secondary batteries have a high energy density and are widely used in the electrical, electronic, communication, and computer industries. In addition to small lithium secondary batteries for portable electronic devices, the application areas of secondary batteries such as high-capacity secondary batteries are expanding to hybrid vehicles and electric vehicles.

With the expansion in applicable fields, lithium secondary batteries are required to have higher capacity and longer lifespan properties. As an exemplary technique of increasing the capacity of lithium secondary batteries, there is a method of using a silicon-containing active material for an anode.

With the use of a silicon-containing active material exhibiting a larger amount of lithium intercalation/deintercalation than conventional carbon-based active materials, battery capacity improvement may be expected. However, there is a problem that silicon-containing active materials exhibit a large volume change with lithium intercalation/de-intercalation, resulting in that an anode active material layer accordingly expands and contracts significantly during charging and discharging.

This consequently leads to a phenomenon that the conduction of anode active material-to-anode active material is deteriorated, or the conduction path between the anode active material and the current collector is blocked, and cycle characteristics of secondary batteries deteriorate.

In addition, various conventional binders (such as PAA, PAA/CMC, Na-PAA, crosslinked PAA, Alginate, PVA, and SBR/CMC) exhibit insufficient adhesion strength, or electrodes are overly brittle and lack durability. For this reason, it has been difficult to solve the volume expansion problem described above so far.

In other words, in the most widely used conventional SBR/CMC water-based binder system, CMC cannot be used in a large volume to prepare a slurry due to its low adhesion strength and high viscosity. SBR is a pressure sensitive-adhesive binder which has excellent adhesion strength but has low mechanical strength, so that SBR exhibits nearly no effect of suppressing Si expansion.

Due to the limitations of the conventional SBR/CMC binder's pressure sensitive-adhesive system, binders for Si active materials are developed using binders of linear polymers (PVA and PAA) that may achieve line adhesion. However, the linear polymers generate significant bubbles during slurry production, so uniform coating is difficult, and defects are generated during electrode production. Additionally, the linear polymers suffer from entanglement, so that the linear polymers inefficiently work as binders and have difficulty in suppressing electrode expansion due to their weak secondary bonds between polymer chains thereof.

To complement the issue that the linear polymers exhibit poor efficiency in suppressing the expansion of electrodes, crosslinking polymers involving crosslinking during electrode drying are used in some cases. However, since the crosslinking polymers exhibit different degrees of crosslinking depending on drying conditions, it is difficult to use the crosslinking polymers in the production process, and the adhesive strength decreases after crosslinking.

Therefore, there is a need for a binder that can solve the problems of conventional binders and improve the performance of secondary batteries.

### [Related Art Document]

### [Patent Document]

(Patent Document 1) Korean Patent Application Publication No. 10-2016-0024921

### Disclosure

### Technical Problem

An objective of the present disclosure is to provide a copolymer capable of improving adhesion strength to a current collector by preventing entanglement and suppressing bubble generation as well as improving coating characteristics by lowering linearity.

In addition, another objective of the present disclosure is to provide a copolymer capable of improving adhesion strength between an active material and a current collector by grafting functional groups with excellent adhesion strength, capable of preventing active materials from being de-intercalated by maintaining strong adhesion strength even when silicone expands, and capable of significantly reducing bubbles and coating defects that occur during slurry production by significantly lowering the linearization of a binder.

In addition, a further objective of the present disclosure is to provide an electrode (particularly, an anode) with excellent performance using the copolymer as a binder and to provide a high-quality secondary battery including the same electrode.

However, the objectives of the present disclosure are not limited to the ones mentioned above. Other objectives that are not mentioned above will be clearly understood by those skilled in the art from the description below.

### Technical Solution

According to one aspect of the present disclosure, there is provided
a copolymer containing a repeating unit represented by Formula 1 below.

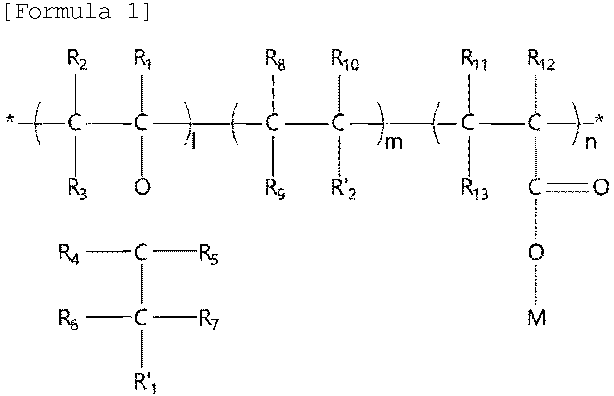

In Formula 1,
R₁ to R₁₃ are different or the same as each other, and are each independently hydrogen or a linear or branched hydrocarbon having 1 to 3 carbon atoms,
R'₁ is a cyano (-CN) group,
R'₂ is -OH, -OCOCH₃, or -COOCH₃,
M is hydrogen or an alkali metal, and
l is 1% or more and 5% or less by weight, m is 10% or more and 85% or less by weight, and n is 10% or more and 85% or less by weight.

According to another aspect of the present disclosure, there is provided a method of preparing a copolymer, the method including:
preparing a copolymer by copolymerizing a vinyl acetate monomer and an acrylate-based monomer;
hydrolyzing the copolymer; and
cyanoethylating the hydrolyzed copolymer by adding an acrylonitrile-based monomer.

According to a further aspect of the present disclosure, there is provided an anode slurry including:
the copolymer; and
an anode active material.

According to a yet further aspect of the present disclosure, there is provided an anode including:
a current collector; and
an anode active material layer including the copolymer and formed on the current collector.

According to a yet further aspect of the present disclosure, there is provided
a secondary battery including:
the anode.

### Advantageous Effects

The copolymer of the present disclosure improves adhesion strength to a current collector. The copolymer prevents active materials from being de-intercalated by maintaining strong adhesion strength even when silicone expands. The copolymer significantly reduces bubbles and coating defects that occur during electrode slurry production.

In addition, the copolymer can be used as a binder to improve the performance of an electrode (particularly, an anode) and secondary batteries including the same electrode.

### Best Mode

Hereinafter, the operation and effects of the present disclosure will be described in more detail through specific embodiments of the present disclosure. However, these embodiments are merely presented as embodiments of the present disclosure, and the scope of the present disclosure is not determined by the embodiments.

Prior to this, terms and words used in this specification and claims should not be construed as limited to their usual or dictionary meanings. Based on the principle that the inventor(s) can appropriately define the concept of the terms in order to explain his or her disclosure in the best way, it is required to be construed as meaning and concept consistent with the technical idea of the present disclosure.

Therefore, the configuration of the embodiments described in this specification is only one of the most preferred embodiments of the present disclosure and does not represent the entire technical idea of the present disclosure. It should be understood that at the time of filing this application, there may be various equivalents and modifications that can replace the preferred embodiments.

In this specification, singular expressions include plural expressions, unless the context clearly dictates otherwise. In this specification, terms such as "include", "comprise", or "have" are intended to indicate the presence of implemented features, numbers, steps, components, or combinations thereof. It should be understood that the terms do not preclude the presence or addition of one or more other features, numbers, steps, components, or combinations thereof.

In this specification, "a to b" and "a to b" that indicate numerical ranges, and "to" and "~" are defined as ≥ a and ≤ b.

One aspect of the present disclosure provides a repeating unit represented by Formula 1 below.

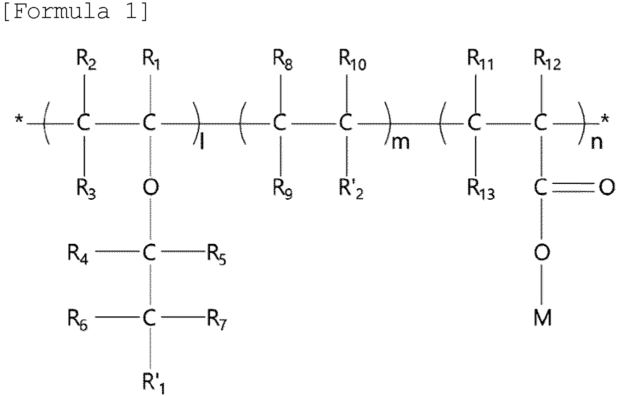

In Formula 1, R₁ to R₁₃ may be different or the same as each other and are each independently hydrogen or a linear or branched hydrocarbon having 1 to 3 carbon atoms, R'₁ may be a cyano (-CN) group, and R'₂ may be -OH, -OCOCH₃, or -COOCH₃, M may be hydrogen or an alkali metal, and l may be 1% or more and 5% or less by weight, m may be 10% or more and 85% or less by weight, and n may be 10% or more and 85% or less by weight.

The alkali metal may be one or more selected from the group consisting of lithium (Li), sodium (Na), and potassium (K).

In the copolymer, the monomer unit corresponding to (1) of Formula 1 may be a cyanoethylated vinyl alcohol-based monomer unit. The monomer unit corresponding to (2) of Formula 1 may be a vinyl alcohol monomer unit. The monomer unit corresponding to (3) of Formula 1 may be an acrylic acid-based monomer unit.

For example, the acrylic acid-based monomer unit may be one or more selected from the group consisting of an acrylic acid salt, methacrylic acid salt, acrylic acid, and methacrylic acid, but is not limited thereto.

When the copolymer is used as an electrode binder, coating characteristics and adhesion strength may be improved as the content of the monomer unit corresponding to (1) of Formula 1 in the copolymer increases. However, when the content is outside the range, the water solubility properties may deteriorate, making the copolymer unusable as an aqueous binder.

In addition, when the copolymer is used as an electrode binder, adhesion strength may be improved as the content of the monomer unit corresponding to (2) of Formula 1 in the copolymer increases. However, when the content is outside the range, coating characteristics may deteriorate.

Meanwhile, when the copolymer is used as an electrode binder, battery performance may be improved as the content of the monomer unit corresponding to (3) of Formula 1 in the copolymer increases. However, when the content is outside the range, adhesion strength and slurry stability may decrease.

In addition, the monomer unit of the copolymer may be made only from monomer unit (1), monomer unit (2), and monomer unit (3) of Formula 1.

In one embodiment, R₁ to R₁₃ of Formula 1 are different from or the same as each other, and may each independently be selected from the group consisting of hydrogen, methyl, ethyl, n-propyl, and iso-propyl.

In another embodiment, the copolymer may be a random or block copolymer.

In a further embodiment, the copolymer may have a number average molecular weight in a range of 10,000 or more and 1,000,000 or less.

In another aspect of the present disclosure, a method of preparing a copolymer may include: preparing a copolymer by copolymerizing a vinyl acetate monomer and an acrylate-based monomer, hydrolyzing the copolymer, and cyanoethylating the hydrolyzed copolymer by adding an acrylonitrile-based monomer.

Through the hydrolyzing, the vinyl acetate monomer and acrylate-based monomer are copolymerized to produce a vinyl acetate monomer unit and acrylate-based monomer unit of the copolymer. The vinyl acetate monomer unit and the acrylate-based monomer unit may be hydrolyzed into a vinyl alcohol monomer unit and acrylic acid-based monomer unit, respectively.

In the hydrolyzing, an alkali metal hydroxide may be used, but is not limited thereto.

Thereafter, a portion of the vinyl alcohol monomer unit may be cyanoethylated through cyanoethylation.

In a yet further embodiment, the acrylate-based monomer may be one or more selected from the group consisting of methylacrylate, methyl methacrylate, ethylacrylate, ethyl methacrylate, propylacrylate, propyl methacrylate, isopropyl acrylate, isopropyl methacrylate, butylacrylate, butyl methacrylate, sec-butyl acrylate, sec-butyl methacrylate, tert-butyl acrylate, tert-butyl methacrylate, and ethylhexyl methacrylate. The acrylonitrile-based monomer may be one or more selected from the group consisting of acrylonitrile and methacrylonitrile.

In a yet further embodiment, in the cyanoethylation, a basic compound may be further added. The basic compound may be one or more selected from the group consisting of NaOH, KOH, and LiOH, but is not limited thereto.

In a further aspect of the present disclosure, an anode slurry may include the copolymer and an anode active material.

That is, the copolymer may be used as a binder for an anode.

The peel strength between the anode active material layer formed using the anode slurry and the copper current collector may be 10 gf/cm or more, and preferably 11 gf/cm.

The anode active material may be one type or a compound containing one or more types selected from the group consisting of carbon-based materials, silicon, alkali metals, alkaline earth metals, Group 13 elements, Group 14 elements, transition metals, and rare earth elements. The anode active material may preferably be silicon or a compound containing silicon.

The carbon-based material includes, for example, artificial graphite, natural graphite, hard carbon, and soft carbon, but is not limited thereto. The type of anode active material containing silicon is not particularly limited as long as the anode active material is silicon or a compound containing silicon, but the anode active material may preferably be one or more selected from the group consisting of Si, SiOₓ (0<x<2), Si-Y alloy (The Y is an alkali metal, alkaline earth metal, Group 13 element, Group 14 element, transition metal, rare earth element, or a combination thereof, but not Si.), and Si-C composite.

In addition, when using a mixture of an anode active material containing silicon and another anode active material as the anode active material, the anode active material containing silicon may be included in 8% or more by weight based on the total weight of the anode active material.

The anode active material may be contained in an amount of 50% to 90% by weight, preferably 60% to 80% by weight, based on the total weight of the anode active material layer.

When the negative active material is contained in an amount of less than 50% by weight, the energy density decreases, making it impossible to manufacture a high energy density battery. When the negative active material is contained in an amount of more than 90% by weight, the content of the conductive material and binder may decrease, resulting in decreased electrical conductivity and decreased adhesion strength between the electrode active material layer and the current collector.

Meanwhile, the copolymer binder of the present disclosure may be contained in an amount of 1% to 20% by weight based on the total weight of the anode slurry. When the copolymer is contained in an amount of less than 1% by weight, the physical properties of the anode may deteriorate and the anode active material and conductive material may fall off. When the copolymer is contained in an amount of more than 20% by weight, the ratio between the anode active material and the conductive material may be relatively reduced, which may reduce battery capacity and reduce the electrical conductivity of the anode.

In addition, the anode slurry may include an additional polymer in addition to the copolymer of the present disclosure. As the polymer, any polymer that is soluble or dispersed in a solvent for preparing an anode slurry may be used, and in particular, a polymer that is soluble or dispersed in water may be used.

The polymer may be, specifically, polyvinylidene fluoride (PVDF), polyvinyl alcohol (PVA), polyacrylic acid (PAA), polyacrylic acid metal salt (Metal-PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, hydroxypropylcellulose, and regenerated cellulose, and various copolymers thereof, but is not limited thereto.

In a yet further aspect, the anode may include a current collector and an anode active material layer including the copolymer of the present disclosure formed on the current collector.

The anode active material layer may further include a conductive material. The conductive material is used to further improve the conductivity of the anode active material. This conductive material is not particularly limited as long as the material is conductive without causing chemical changes in the battery. For example, the conductive material may be graphite such as natural graphite or artificial graphite; carbon black such as carbon black, acetylene black, Ketjen black, channel black, furnace black, lamp black, and summer black; conductive fibers such as carbon fiber and metal fiber; metal powders such as carbon fluoride, aluminum, and nickel powder; conductive whiskers such as zinc oxide and potassium titanate; conductive metal oxides such as titanium oxide; and polyphenylene derivatives.

The conductive material may be contained in an amount of 5% to 30% by weight, preferably 15% to 25% by weight, based on the total weight of the anode active material layer. When the conductive material is contained in an amount of less than 5% by weight, the electrical conductivity of the anode is lowered. When the conductive material is contained in an amount of more than 30% by weight, the ratio of the silicon-based anode active material and the binder is relatively reduced, thereby reducing battery capacity. This requires an increase in the content of the binder to maintain the anode active material layer so, the content of the anode active material decreases, making it impossible to manufacture a battery with high energy density.

In the anode of the present disclosure, the anode active material layer may contain the copolymer of the present disclosure, so that the anode active material may be suppressed from being expanded in volume during charging and discharging of the secondary battery, and the performance of the secondary battery may be improved.

The anode may be prepared through (a) preparing a composition for forming an anode active material layer containing the anode active material and the copolymer of the present disclosure and (b) applying the composition for forming the anode active material layer on the anode current collector and then drying the composition.

Most preferably, the composition for forming the anode active material layer is prepared in the form of an anode slurry. A solvent for preparing the composition in a slurry state is required to be easy to dry and to dissolve the copolymer binder of the present disclosure well. However, the solvent is required to allow the anode active material in a dispersed state consistently without dissolving the anode active material.

The solvent in the present disclosure may be water or an organic solvent. The organic solvent may be an organic solvent containing one or more selected from the group consisting of methylpyrrolidone, dimethylformamide, isopropyl alcohol, acetonitrile, methanol, ethanol, and tetrahydrofuran.

Preferably, water may be used alone as the solvent in the present disclosure.

The composition for forming the anode active material layer may be mixed in a conventional manner using a conventional mixer, such as a rate mixer, high-speed shear mixer, or homomixer.

The step (b) involves manufacturing an anode for a lithium secondary battery by applying the composition for forming the anode active material layer prepared in the step (a) onto the anode current collector and drying the composition.

Specifically, the anode current collector may be any one selected from the group consisting of copper, stainless steel, titanium, silver, palladium, nickel, and alloys thereof, and combinations thereof. The stainless steel may be subjected to surface treatment with carbon, nickel, titanium, or silver. The alloy may be an aluminum-cadmium alloy. In addition, a calcined carbon, non-conductive polymer surface treated with a conductive material, or conductive polymer may be used.

The composition for forming the anode active material layer prepared in the step (a) is applied onto the anode current collector and may be applied onto the current collector for coating at a predetermined thickness depending on the thickness to be formed. The coating thickness may be appropriately selected, preferably within the range of 10 to 300 µm.

At this time, the method of applying the slurry-type composition for forming the anode active material layer is not limited. For example, the coating with composition may be performed by any one selected from the group consisting of doctor blade coating, dip coating, gravure coating, slit die coating, spin coating, comma coating, bar coating, reverse roll coating, screen coating, and cap coating methods.

After the application and drying of the composition, an anode for a secondary battery (particularly a lithium secondary battery) with the anode active material layer finally formed may be manufactured.

In a yet further aspect, the battery may include a current collector and an anode with the anode active material layer formed on the current collector.

The battery may be a secondary battery (particularly, a lithium secondary battery) including a cathode, an anode, a separator interposed between the cathode and anode, and an electrolyte solution.

The composition of the cathode, separator, and electrolyte of the lithium secondary battery is not particularly limited in the present disclosure and follows what is known in the field.

The cathode includes a positive electrode active material formed on the positive electrode current collector.

The positive electrode current collector is not particularly limited as long as the positive electrode current collector has high conductivity without causing chemical changes in the battery. The positive electrode current collector may be, for example, stainless steel, aluminum, nickel, titanium, calcined carbon, or aluminum, or stainless steel surface treated with carbon, nickel, titanium, or silver. At this time, the positive electrode current collector may be used in various forms such as films, sheets, foils, nets, porous materials, foams, and non-woven fabrics with fine irregularities formed on the surface to increase adhesion strength with the positive electrode active material.

The positive electrode active material constituting the positive electrode active material layer may be any positive electrode active material available in the art. For example, the positive electrode active material may be lithium metal; lithium cobalt-based oxides such as LiCoO₂; lithium manganese-based oxides such as Li₁₊ₓMn₂₋ₓO₄ (where x is 0 to 0.33), LiMnO₃, LiMn₂O₃, and LiMnO₂; lithium copper oxides such as Li₂CuO₂; vanadium oxides such as LiV₃O₈, LiFe₃O₄, V₂O₅, and Cu₂V₂O₇; lithium nickel-based oxides expressed as LiNi₁₋ₓMₓO₂ (where M is Co, Mn, Al, Cu, Fe, Mg, B, or Ga, and x is 0.01 to 0.3); lithium manganese composite oxides expressed as LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); lithium-nickel-manganese-cobalt-based oxides expressed as Li (Ni ₐCo_{b}Mn_{c}) O₂ (where 0<a<1, 0<b<1, and 0<c<1, and a+b+c=1) ; sulfur or disulfide compounds; phosphates such as LiFePO₄, LiMnPO₄, LiCoPO₄, and LiNiPO₄; and Fe₂(MoO₄)₃, but is not limited thereto.

At this time, the positive electrode active material layer may further include a binder, a conductive material, a filler, and other additives in addition to the positive electrode active material. The conductive material is the same as that described above for the anode for the lithium secondary battery.

In addition, the binder may be, specifically, polyvinylidene fluoride (PVDF), polyvinyl alcohol (PVA), polyacrylic acid (PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), and fluorine rubber, and various copolymers thereof, but is not limited thereto.

The separator may be made of a porous substrate. The porous substrate may be any porous substrate commonly used in electrochemical devices. The porous substrate may be, for example, a polyolefin-based porous membrane or non-woven fabric, but is not particularly limited thereto.

The separator may be a porous substrate made from any one type or made from one or more types selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate.

The electrolyte of the lithium secondary battery is a non-aqueous electrolyte containing lithium salt and is made from lithium salt and a solvent. The solvent used is a non-aqueous organic solvent, an organic solid electrolyte, and an inorganic solid electrolyte.

The lithium salt is an easily soluble material in the non-aqueous electrolyte solution. For example, the lithium salt may be LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC (CF₃SO₂)₃, (CF₃SO₂)·2NLi, lithium chloroborane, short chain lithium aliphatic carboxylate, and 4 phenylborate lithium imide.

The non-aqueous organic solvent for use may be, for example, an aprotic organic solvent such as N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc (franc), 2-methyl tetrahydrofuran, dimethylsulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxy methane, dioxolane derivatives, sulfolane, methylsulfolane, 1,3-dimethyl-2-imidazolidinone, propylene carbonate derivatives, tetrahydrofuran derivatives, ether, methyl propionate, and ethyl propionate.

The organic solid electrolyte for use may be, for example, polyethylene derivatives, polyethylene oxide derivatives, polypropylene oxide derivatives, phosphate ester polymers, poly agitation lysine, polyester sulfide, polyvinylalcohol, poly vinylidene fluoride, and polymers containing secondary dissociation groups.

The inorganic solid electrolyte for use may be, for example, nitride, halides, and sulfates of Li such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

In addition, the non-aqueous electrolyte may further contain other additives to improve charge/discharge properties and flame retardancy. The other additives for use may be, for example, pyridine, triethylphosphite, triethanolamine, cyclic ether, ethylene diamine, n-glyme, hexaphosphate triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethanol, aluminum trichloride, fluoroethylene carbonate (FEC), propene sultone (PRS), and vinylene carbonate (VC).

The lithium secondary battery according to the present disclosure may be subjected to lamination (stack) and folding processes with separators and electrodes thereof in addition to the general winding process. A case for the battery may be cylindrical, prismatic, pouch-shaped, or coin-shaped.

### Mode for Disclosure

Hereinafter, the present disclosure will be described in more detail using examples, but the present disclosure is not limited thereto.

### [Example 1]

944 g of distilled water and 9 g of alkyldiphenyloxide disulfonate were put into a reactor, and the mixture was stirred for 1 hour while nitrogen was blown into the reactor.

Next, 1.29 g of potassium persulfate was added, and the temperature of the reactor was raised to 60°C, and then 115 g of vinyl acetate and 312 g of ethyl acrylate were added dropwise over 3 hours, and the reaction was terminated while maintaining the temperature for 2 hours to obtain 30% by weight of poly(vinylacetate-co-ethylacrylate (PVAc-PEA) copolymer.

150 g of ethanol was added to the reactor to dissolve 100 g of 30% by weight of the PVAc-PEA copolymer. Afterward, 27 g of a basic compound was added, and hydrolysis was performed while stirring the mixture at a temperature of 60°C for 4 hours.

After completion of the hydrolysis, the precipitated hydrolyzate was dissolved in distilled water and heated to 80°C to obtain 5% by weight of poly(vinyl alcohol-co-acrylic acid (PVA-PAA) copolymer.

1 part by weight of the 5% by weight of PVA-PAA copolymer was added to the reactor. 0.1 part by weight of a basic compound and 0.5 part by weight of acrylonitrile were added for a predetermined time, and then cyanoethylation was performed while stirring the mixture at a temperature of 40°C for 2 hours to perform cyanoethylation.

After completion of the reaction, a poly(vinyl alcohol-co-acrylic acid-co-cyanoethylated vinyl alcohol (PVA-PAA-CEPVA) copolymer aqueous solution was obtained.

### [Example 2]

944 g of distilled water and 9 g of alkyldiphenyloxide disulfonate were put into a reactor, and the mixture was stirred for 1 hour while nitrogen was blown into the reactor.

Next, 1.29 g of potassium persulfate was added, and the temperature of the reactor was raised to 60°C, and then 197 g of vinyl acetate and 229 g of ethyl acrylate were added dropwise over 3 hours, and the reaction was terminated while maintaining the temperature for 2 hours to obtain 30% by weight of poly(vinylacetate-co-ethylacrylate (PVAc-PEA) copolymer.

150 g of ethanol was added to the reactor to dissolve 100 g of 30% by weight of the PVAc-PEA copolymer. Afterward, 27 g of a basic compound was added, and hydrolysis was performed while stirring the mixture at a temperature of 60°C for 4 hours.

After completion of the hydrolysis, the precipitated hydrolyzate was dissolved in distilled water and heated to 80°C to obtain 5% by weight of poly (vinyl alcohol-co-acrylic acid (PVA-PAA) copolymer.

1 part by weight of the 5% by weight of PVA-PAA copolymer was added to the reactor. 0.1 part by weight of a basic compound and 0.5 part by weight of acrylonitrile were added for a predetermined time, and then cyanoethylation was performed while stirring the mixture at a temperature of 40°C for 2 hours to perform cyanoethylation.

After completion of the reaction, a poly(vinyl alcohol-co-acrylic acid-co-cyanoethylated vinyl alcohol (PVA-PAA-CEPVA) copolymer aqueous solution was obtained.

### [Example 3]

A reaction proceeded in the same manner as in Example 2 to obtain poly(vinyl alcohol-co-acrylic acid-co-cyanoethylated vinyl alcohol (PVA-PAA-CEPVA) copolymer except that 285 g of vinyl acetate and 142 g of ethylacrylate were reacted instead of 197 g of vinyl acetate and 229 g of ethylacrylate to obtain 30% by weight of poly(vinylacetate-co-ethylacrylate (PVAc-PEA) copolymer.

### [Example 4]

A reaction proceeded in the same manner as in Example 2 to obtain poly(vinyl alcohol-co-acrylic acid-co-cyanoethylated vinyl alcohol (PVA-PAA-CEPVA) copolymer except that 115 g of vinyl acetate and 312 g of ethylacrylate were reacted instead of 197 g of vinyl acetate and 229 g of ethylacrylate to obtain 30% by weight of poly(vinylacetate-co-ethylacrylate (PVAc-PEA) copolymer, and 0.3 parts by weight of acrylonitrile was used instead of 0.5 parts by weight of acrylonitrile in the cyanoethylation.

### [Comparative Example 1]

944 g of distilled water and 9 g of alkyldiphenyloxide disulfonate were put into the reactor, and the mixture was stirred for 1 hour while nitrogen was blown into the reactor.

Next, 1.29 g of potassium persulfate was added, and the temperature of the reactor was raised to 60°C, and then 427 g of vinylacetate was added dropwise over 3 hours, and the reaction was terminated while maintaining the temperature for 2 hours to obtain 30% by weight of polyvinyl acetate (PVAc) polymer.

150 g of ethanol was added to the reactor to dissolve 100 g of 30% by weight of the PVAc polymer. Afterward, 27 g of a basic compound was added, and hydrolysis was performed while stirring the mixture at a temperature of 60°C for 4 hours.

After completion of the hydrolysis, the precipitated hydrolyzate was dissolved in distilled water and heated to 80°C to obtain 5% by weight of polyvinyl alcohol (PVA) polymer.

1 part by weight of the 5% by weight of PVA polymer was added to the reactor. 0.1 part by weight of a basic compound and 0.5 part by weight of acrylonitrile were added for a predetermined time, and then cyanoethylation was performed while stirring the mixture at a temperature of 40°C for 2 hours to perform cyanoethylation.

After completion of the reaction, a poly(vinyl alcohol-co-cyanoethylated vinyl alcohol (PVA-CEPVA) copolymer aqueous solution was obtained.

### [Comparative Example 2]

944 g of distilled water and 9 g of alkyldiphenyloxide disulfonate were put into a reactor, and the mixture was stirred for 1 hour while nitrogen was blown into the reactor.

Next, 1.29 g of potassium persulfate was added, and the temperature of the reactor was raised to 60°C, and then 427 g of ethylacrylate was added dropwise over 3 hours, and the reaction was terminated while maintaining the temperature for 2 hours to obtain 30% by weight of polyethyl acrylate (PEA) polymer.

150 g of ethanol was added to the reactor to dissolve 100 g of 30% by weight of the PEA polymer. Afterward, 27 g of a basic compound was added, and hydrolysis was performed while stirring the mixture at a temperature of 60°C for 4 hours.

After completion of the hydrolysis, the precipitated hydrolyzate was dissolved in distilled water and heated to 80°C to obtain 5% by weight of polyacrylic acid (PAA) polymer.

### [Comparative Example 3]

A reaction proceeded in the same manner as in Example 2 to obtain 5% by weight of poly(vinyl alcohol-co-acrylic acid (PVA-PAA) copolymer except that cyanoethylation was excluded.

### [Comparative Example 4]

A reaction proceeded in the same manner as in Example 4 to obtain poly(vinyl alcohol-co-acrylic acid-co-cyanoethylated vinyl alcohol (PVA-PAA-CEPVA) copolymer except that 1.1 parts by weight of acrylonitrile was used instead of 0.3 parts by weight of acrylonitrile in the cyanoethylation.

The weight percent and water solubility of each monomer unit of the copolymers prepared in Examples 1 to 4 and the polymer and copolymers of corresponding Comparative Examples 1 to 4 are shown in Table 1 below.

**[Table 1]**

| | Monomer unit weight ratio (VA:AA: CEVA) (weight%) | solubility |
|---|---|---|
| Example 1 | 25 : 70 : 5 | ○ |
| Example 2 | 45 : 50 : 5 | ○ |
| Example 3 | 65 : 30 : 5 | ○ |
| Example 4 | 27 : 70 : 3 | ○ |
| Comparative Example 1 | 95 : 0 : 5 | ○ |
| Comparative Example 2 | 0 : 100 : 0 | ○ |
| Comparative Example 3 | 50 : 50 : 0 | ○ |
| Comparative Example 4 | 20 : 70 : 10 | X |

In Table 1, VA represents a vinyl alcohol monomer unit, AA represents an acrylic acid monomer unit, and CEVA represents a cyanoethylated vinyl alcohol monomer unit. "O" in water solubility indicates that a substance is soluble in water, and "X" indicates that a substance does not dissolve in water and precipitates.

### [Preparation Example 1] Manufacturing of Anodes

Anode slurries were prepared by mixing 89 g of artificial graphite, 8 g of SiOₓ, 3.2 g of carbon nanotubes as electrode active materials, 3 g of binders including the corresponding copolymers prepared in Examples 1 to 4, and the polymer and copolymers prepared in corresponding Comparative Examples 1 to 4, and distilled water.

The prepared anode slurries were uniformly applied onto their corresponding copper current collectors, and then dried at a temperature of 110°C. After the drying, the products were rolled and heated in a vacuum oven at a temperature of 110°C for more than 4 hours to manufacture anodes.

### [Preparation Example 2] Manufacturing of Lithium secondary batteries

A non-aqueous electrolyte including a lithium salt was used as an electrolyte, and a polyolefin separator was interposed between the anodes prepared in Preparation Example 1 and their paired cathodes. Next, Lithium secondary batteries were manufactured in pouch or coin cell types without distinction of shape.

As the non-aqueous electrolyte, LiPF₆ electrolyte was dissolved to have a concentration of 1M in a solvent, which was a mixture of ethylene carbonate, ethylmethyl carbonate, and diethyl carbonate in a volume ratio of 3:5:2.

### [Evaluation Example 1] Evaluation of Anode Slurry Coating Characteristics

Anode slurries prepared using each of the copolymers of Examples 1 to 4, and the polymer and copolymers of the corresponding Comparative Examples 1 to 4 were used to manufacture anodes according to Preparation Example 1. It was visually observed whether each of the anode slurries was uniformly applied to the copper current collector of the respective anode.

In addition, it was visually observed whether bubbles were generated in each of the anode slurries applied to the corresponding copper current collectors.

### [Evaluation Example 2] Copolymer Adhesion Strength Evaluation

Anodes were manufactured according to Preparation Example 1 using the copolymers of Examples 1 to 4, the polymer and copolymers of the corresponding Comparative Examples 1 to 3. The copper current collectors of the manufactured anodes and the anode slurry layers formed on the corresponding copper current collectors were peeled at 180° using a universal testing machine (UTM) to measure adhesion strength.

### [Evaluation Example 3] Cell Property Measurement

The anodes prepared according to Preparation Example 1 using each of the copolymers of Examples 1 to 4, and each of the polymer and copolymers of the corresponding Comparative Examples 1 to 3 was applied to manufacture lithium secondary batteries according to Preparation Example 2.

Afterward, the manufactured lithium secondary batteries were repeatedly charged and discharged at 1C, and the experiments were conducted up to 60 cycles.

Measurement results on the coating characteristics, adhesion strength, and battery property (capacity retention rate) based on Evaluation Example 1, Evaluation Example 2, and Evaluation Example 3 are shown in Table 2 below.

**[Table 2]**

| | Coating characteristics | Bubble Generation | Adhesion strength (gf/cm) | Capacity Retention Rate (%, @60cycle) |
|---|---|---|---|---|
| Example 1 | Good | X | 11.5 | 98.1 |
| Example 2 | Good | X | 14.0 | 97.3 |
| Example 3 | Good | X | 15.2 | 94.2 |
| Example 4 | Good | X | 11.9 | 95.8 |
| Comparative Example 1 | Poor | ○ | 9.9 | 87.2 |
| Comparative Example 2 | Poor | X | 6.3 | 90.4 |
| Comparative Example 3 | Good | X | 8.5 | 89.6 |
| Comparative Example 4 | Coating not possible | | | |

In Table 2, "Good" in the coating characteristics section indicates that the coating is uniformly formed on the current collector and there is no problem with coating. "Poor" in the coating characteristics section indicates that stripes occurred during coating on the current collector or that bubbles were generated, so the coating was not uniform.

In addition, "O" in the bubble generation section indicates that bubbles were observed, and "X" in the bubble generation section indicates that bubbles were not observed.

It was confirmed that in the case of the anode using the poly(vinyl alcohol-co-cyanoethylated vinyl alcohol (PVA-CEPVA) copolymer of Comparative Example 1 as a binder, the coating characteristics deteriorated compared to the anodes using poly(vinyl alcohol-co-acrylic acid-co-cyanoethylated vinyl alcohol (PVA-PAA-CEPVA) copolymers of Examples 1 to 4 as a binder. In addition, bubbles were observed, and the adhesion strength was also decreased.

It was confirmed that in the case of the anode using the polyacrylic acid (PAA) polymer of Comparative Example 2 as a binder, the coating characteristics deteriorated compared to the anodes using poly(vinyl alcohol-co-acrylic acid-co-cyanoethylated vinyl alcohol (PVA-PAA-CEPVA) copolymers of Examples 1 to 4 as a binder. In addition, the adhesion strength was also decreased.

In addition, it was confirmed that in the case of the anode using the poly(vinyl alcohol-co-acrylic acid (PVA-PAA) copolymer of Comparative Example 3 as a binder, the adhesion strength was decreased compared to the anodes using poly(vinyl alcohol-co-acrylic acid-co-cyanoethylated vinyl alcohol (PVA-PAA-CEPVA) copolymers of Examples 1 to 4 as a binder.

Meanwhile, the poly(vinyl alcohol-co-acrylic acid-co-cyanoethylated vinyl alcohol (PVA-PAA-CEPVA) copolymer of Comparative Example 4 obtained by increasing the content of a cyanoethylated vinyl alcohol monomer unit to 10% by weight was not soluble as well as could not form a coating on the current collector, so electrodes and batteries could not be manufactured.

In addition, it was confirmed that the lithium secondary batteries using the anodes taking poly(vinyl alcohol-co-acrylic acid-co-cyanoethylated vinyl alcohol (PVA-PAA-CEPVA) copolymers of Examples 1 to 4 as a binder had a better capacity retention rate per cycle than the lithium secondary batteries using the anodes taking the polymer and copolymers of the corresponding Comparative Examples 1 to 3 as a binder.

Consequently, the copolymer binders of Examples 1 to 4 of the present disclosure provided better coating characteristics and adhesion strength when manufacturing electrodes than the copolymer or polymer-only binders of Comparative Examples 1 to 4. Through this, it was confirmed that the copolymer binders might be useful to manufacture lithium secondary batteries with excellent capacity retention per cycle.

The scope of the present disclosure is indicated by the claims described below rather than the detailed description above, and all changes or modified forms derived from the meaning and scope of the claims and their equivalent concepts should be construed to be included in the scope of the present disclosure.

### Industrial Applicability

The copolymer of the present disclosure improves adhesion strength to a current collector. The copolymer prevents active materials from being de-intercalated by maintaining strong adhesion strength even when silicone expands. The copolymer significantly reduces bubbles and coating defects that occur during electrode slurry production.

In addition, the copolymer may be used as a binder to improve the performance of an electrode (particularly, an anode) and secondary batteries including the same electrode.

## Claims

1. A copolymer comprising a repeating unit represented by Formula 1 below, 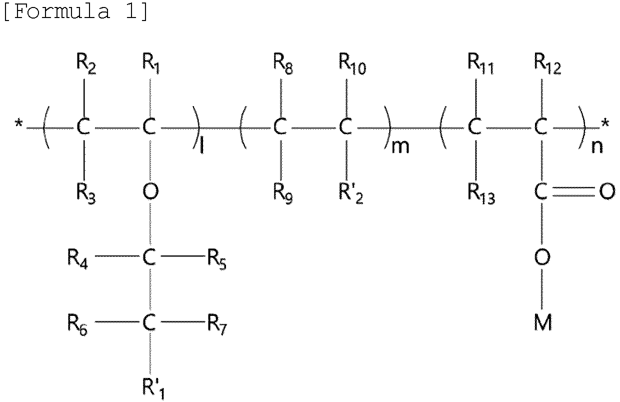 wherein in Formula 1,
R₁ to R₁₃ are different or the same as each other, and are each independently hydrogen or a linear or branched hydrocarbon having 1 to 3 carbon atoms,
R'₁ is a cyano (-CN) group,
R'₂ is -OH, -OCOCH₃, or -COOCH₃,
M is hydrogen or an alkali metal, and
l is 1% or more and 5% or less by weight, m is 10% or more and 85% or less by weight, and n is 10% or more and 85% or less by weight.

2. The copolymer of claim 1, wherein the R₁ to R₁₃ of Formula 1 are different from or the same as each other, and are each independently selected from the group consisting of hydrogen, methyl, ethyl, n-propyl, and iso-propyl.

3. The copolymer of claim 1, wherein the copolymer is a random copolymer or a block copolymer.

4. The copolymer of claim 1, wherein the copolymer has a number average molecular weight in a range of 10,000 or more and 1,000,000 or less.

5. A method of preparing a copolymer, the method comprising:
preparing a copolymer by copolymerizing a vinyl acetate monomer and an acrylate-based monomer;
hydrolyzing the copolymer; and
cyanoethylating the hydrolyzed copolymer by adding an acrylonitrile-based monomer.

6. The method of claim 5, wherein the acrylate-based monomer is one or more selected from the group consisting of methylacrylate, methyl methacrylate, ethylacrylate, ethyl methacrylate, propylacrylate, propyl methacrylate, isopropyl acrylate, isopropyl methacrylate, butylacrylate, butyl methacrylate, sec-butyl acrylate, sec-butyl methacrylate, tert-butyl acrylate, tert-butyl methacrylate, and ethylhexyl methacrylate, and
the acrylonitrile-based monomer is one or more selected from the group consisting of acrylonitrile and methacrylonitrile.

7. The method of claim 5, wherein in the cyanoethylation, a basic compound is further added.

8. An anode slurry, comprising:
the copolymer of any one of claims 1 to 4; and
an anode active material.

9. An anode, comprising:
a current collector; and
an anode active material layer containing the copolymer of any one of claims 1 to 4 formed on the current collector.

10. A secondary battery, comprising the anode of the claim 9.
